# EUROPÄISCHE PATENTSCHRIFT

(11) **EP 3 991 194 B1**
(45) Veröffentlichungstag und Bekanntmachung des Hinweises auf die Patenterteilung: **12.07.2023**
(21) Anmeldenummer: 20728990.1
(22) Anmeldetag: 18.05.2020
(51) Int. Cl.: H01H 33/16, H01H 33/66, H01H 33/666, H01H 33/14, H01G 5/16, H01G 5/40

(54) **SCHALTGERÄTE MIT ZWEI IN REIHE GESCHALTETEN UNTERBRECHEREINHEITEN**
SWITCHING DEVICES COMPRISING TWO INTERRUPTER UNITS CONNECTED IN SERIES
DISPOSITIFS DE COMMUTATION COMPRENANT DEUX UNITÉS D'INTERRUPTEURS CONNECTÉES EN SÉRIE

(30) Priorität: 13.08.2019 DE 102019212106
(43) Veröffentlichungstag der Anmeldung: 04.05.2022
(73) Patentinhaber: Siemens Energy Global GmbH & Co. KG, 81739 München (DE)
(72) Erfinder: GOEBELS, Tobias Alexander, 47661 Issum (DE); KOSSE, Sylvio, 91052 Erlangen (DE); NIKOLIC, Paul Gregor, 91058 Erlangen (DE)
(86) Internationale Anmeldenummer: PCT/EP2020/063754
(87) Internationale Veröffentlichungsnummer: WO 2021/028085

(56) Entgegenhaltungen:
- WO-A1-03/028789
- DE-A1- 2 526 942
- US-A- 3 541 284

## Beschreibung

Die Erfindung betrifft ein Schaltgerät mit zwei in Reihe geschalteten Unterbrechereinheiten nach dem Oberbegriff des Patentanspruchs 1.

Reihenschaltungen oder Serienschaltungen von Unterbrechereinheiten, wie z. B. aus der US 3 541 284 A bekannt, finden in der Energieversorgung vielfache Anwendung. Zum Beispiel besteht eine Anwendung darin, dass ein Schaltgerät mehrere Unterbrechereinheiten in Form von Vakuumschaltröhren umfasst, die in Serie (gleichbedeutend mit einer Reihenschaltung) geschaltet sind und bei Hochspannungsanwendungen durch die Serienschaltung die Spannungsfestigkeit erhöht wird. Letztendlich dient die Serienschaltung von Unterbrechereinheiten jedoch im Wesentlichen dazu, die Spannungsfestigkeit der Schaltung gegenüber einzelnen Röhren zu erhöhen. Dabei ist es eine technische Herausforderung, zu gewährleisten, dass die Spannungsaufteilung auf die einzelnen in Reihe geschalteten Unterbrechereinheiten so gesteuert wird, dass keine der Unterbrechereinheiten über ihre Spannungsfestigkeit hinaus belastet wird.

Zur Sicherung der Spannungsaufteilung zwischen den einzelnen Unterbrechereinheiten werden Steuerkondensatoren wiederum zu jeder Unterbrechereinheit parallelgeschaltet. In Abhängigkeit des sogenannten Nachstroms, der in der Unterbrechereinheit fließt, nachdem die Stromunterbrechung bereits stattgefunden hat, weicht die Spannungsverteilung zwischen den beiden oder zwischen mehreren Unterbrechereinheiten beim Einsatz von Steuerkondensatoren von dem errechneten oder statistischen Fall ab. Der erwähnte Nachstrom kann beispielsweise durch Metalldampf in der Vakuumröhre oder Restladungsträger in der Schaltstrecke hervorgerufen werden. Somit ist die Spannungsaufteilung zwischen den Unterbrechereinheiten während des Schaltvorgangs nicht stationär, sondern dynamisch.

Diese Dynamik der Spannungsverteilung während des Schaltvorganges führt jedoch dazu, dass durch die genannten Steuerkondensatoren nicht verhindert werden kann, dass eine der Unterbrechereinheiten, wenn auch für kurze Zeit, eine höhere Spannung verkraften muss, als ihre Bemessungsspannung, also das, was ihre sogenannte Spannungsfestigkeit zulässt. Daher sind bei der Reihenschaltung von Unterbrechereinheiten, insbesondere bei Vakuumröhren, diese so auszulegen, dass erhebliche Reserven bezüglich der Spannungsfestigkeit der einzelnen Unterbrechereinheiten gewährleistet sind. Wenn eine bestimmte Bemessungsspannung gefordert ist, kann es sein, dass entweder zwei Unterbrechereinheiten mit einer höheren Bemessungsspannung als nominell erforderlich in Reihe geschaltet werden müssen oder es müssen mehr als zwei Unterbrechereinheiten mit einer niedrigeren Bemessungsspannung in Reihe geschaltet werden. In beiden Fällen ist der Kostenaufwand für das Erreichen der geforderten gesamten Bemessungsspannung der Reihenschaltung aufgrund der dynamischen Spannungsverteilung während des Schaltvorganges höher, als wenn man die reinen Bemessungsspannungen der einzelnen Komponenten zusammensetzen würde. Dies erfordert ein höheres Investment an Unterbrechereinheiten bei einer vorgegebenen Bemessungsspannung.

Die Aufgabe der Erfindung besteht darin, ein Schaltgerät mit zwei oder mehreren in Reihe geschalteten Unterbrechereinheiten bereitzustellen, das gegenüber dem Stand der Technik bei Einsatz von gleichen Komponenten eine höhere Spannungsfestigkeit aufweist.

Die Lösung der Aufgabe besteht in einem Schaltgerät mit zwei in Reihe geschalteten Unterbrechereinheiten mit den Merkmalen des Patentanspruchs 1.

Das Schaltgerät nach Patentanspruch 1 weist mindestens zwei in Reihe geschaltete Unterbrechereinheiten mit mindestens einer Antriebseinheit zur Bewegung mindestens eines Kontaktes und mit zwei jeweils zu den Unterbrechereinheiten parallelgeschalteten Steuerkondensatoren auf. Das Schaltgerät zeichnet sich dadurch aus, dass zumindest ein Steuerkondensator zur Veränderung der Kapazität mechanisch bewegbare Komponenten aufweist und mindestens eine dieser Komponenten eine mechanische Kopplung mit der Antriebseinheit aufweist.

Durch die Kopplung einer bewegbaren Komponente des Steuerkondensators mit der Antriebseinheit, die auch den Antrieb zumindest einer Unterbrechereinheit vollzieht, kann während des eigentlichen Schaltvorganges, in dem die Spannungsverteilung zwischen den mindestens zwei in Reihe geschalteten Unterbrechereinheiten dynamisch variiert, so durch den Steuerkondensator beeinflusst werden, dass sichergestellt ist, dass an beiden Unterbrechereinheiten während des Schaltvorganges zu jeder Zeit des Schaltvorgangs nahezu dieselbe Spannung anliegt. Auf diese Weise kann die Bemessungsspannung, also die Spannung, mit der die gewählte Unterbrechereinheit maximal sicher zu betreiben ist, bei der Reihenschaltung voll ausgenutzt werden. Sicherheitsreserven in der Spannungsfestigkeit, die zu einer mögliche dynamische Spannungsverteilung während des Schaltvorganges vorgehalten werden, können deutlich reduziert werden. Dies hat den Vorteil, dass zum Erreichen einer geforderten maximalen Schaltspannung entweder weniger Unterbrechereinheiten in Reihe geschaltet werden oder Unterbrechereinheiten mit geringerer Bemessungsspannung in Reihe geschaltet werden müssen. Beides führt dazu, dass für das Gewährleisten einer entsprechenden geforderten Bemessungsspannung ein niedrigeres Investment in Form von Unterbrechereinheiten notwendig ist.

Besonders zweckmäßig ist diese Anordnung bei der Verwendung von Vakuumschaltröhren als Unterbrechereinheiten. Hierbei können zwei oder mehrere Vakuumschaltröhren, wie genannt, in Reihe bzw. in Serie geschaltet werden. Grundsätzlich kann jedoch auch eine Vakuumschaltröhre mit einer Gasstrecke in Reihe geschaltet werden.

Der Steuerkondensator, der die dynamische Steuerung der Kapazität gewährleistet, hat mindestens eine bewegbare Komponente, die mit der Antriebseinheit mechanisch gekoppelt ist. Dabei kann es sich grundsätzlich um das Dielektrikum handeln, das bezüglich einer bzw. zweier Elektroden verschoben wird, es kann jedoch auch ein elektrischer Kontakt entlang einer Elektrode bzw. eines Dielektrikums verschoben werden. Grundsätzlich können auch Elektroden bezüglich eines feststehenden Dielektrikums verschoben werden. Die beschriebenen möglichen Bewegungen der entsprechenden Komponenten des Steuerkondensators führen zu einer dynamischen Änderung der durch am Kondensator anliegenden Kapazität.

Dabei ist unter den Begriffen mechanische Kopplung verstanden, dass der Steuerkondensator mechanisch mit der Antriebseinheit in Verbindung steht, das bedeutet, dass zur Übertragung einer Kraft, eines Impulses oder einer Aktion zwischen zwei Systemen eine mechanische Verbindung besteht. Diese wird beispielsweise über bewegliche Verbindungen wie Lager oder Gelenke, aber auch über feste Verbindungen wie stoffschlüssige oder kraftschlüssige Verbindungen oder aus Kombinationen als bewegliche und feste Verbindungen erfolgen.

Unter dieser mechanischen Verbindung wird auch das Einbringen eines übersetzenden Elementes beispielsweise eines Getriebes verstanden. Dieses übersetzende Element ist dazu geeignet, zur Steuerung einer Bewegungskinematik der entsprechenden Komponente des Steuerungskondensators beizutragen. Die Antriebseinheit des Schaltgerätes oder einer einzelnen Unterbrechereinheit ist so gestaltet, dass der Öffnungs- oder Schließvorgang eines Kontaktes oder eines Kontaktsystems genau hierfür optimiert ist. Verwendet man die genannte Antriebseinheit, die die eine oder mehrere Unterbrechereinheiten des Schaltgerätes antreibt, gleichzeitig dazu, entsprechende Komponenten des Steuerkondensators so zu bewegen, dass eine dynamisch veränderte Kapazität des Steuerkondensators vorliegt, die wiederum einen Ausgleich der Spannungsspitzen in der Unterbrechereinheit bewirkt, so kann es nötig sein, dass diese Kinematik einer anderen Gesetzmäßigkeit folgt, als dies für die optimierte Antriebseinheit der Schaltkontakte der Fall ist. Der notwendige Verlauf der Kapazität des Steuerkondensators zur Beeinflussung der Spannungsdifferenzen zwischen den Unterbrechereinheiten kann experimentell bestimmt werden. Aufgrund dieser experimentellen Daten kann wiederum eine notwendige Veränderung der Steuerkapazität und somit eine entsprechende Veränderung pro Zeit oder eine Veränderungsgeschwindigkeit oder eine Veränderungskinematik der Steuerkapazität bestimmt werden.

Aus diesen Informationen heraus kann eine Getriebekinematik des übersetzenden Elementes berechnet werden, die dazu dient, die Komponenten des Steuerkondensators so während des Schaltvorgangs zueinander zu bewegen, dass jeweils die richtige Steuerkapazität anliegt.

Dabei sind bei der Darstellung des variablen Steuerkondensators mehrerer Anordnungen bezüglich des Kondensators zur Unterbrechereinheit möglich. Eine vorteilhafte Ausgestaltung besteht darin, dass die Unterbrechereinheit mit einem Isolatorgehäuse versehen ist, wobei das Gehäuse nicht geerdet ist. Es handelt sich hierbei um eine sogenannte Live-Tank-Bauweise. In diesem Fall ist der Steuerkondensator außerhalb des nicht geerdeten Isoliergehäuses angeordnet und zu den Kontaktierungen der Unterbrechereinheit parallelgeschaltet.

In einer weiteren Ausgestaltungsform beispielsweise bei einer gasisolierten Schaltung oder einer sogenannten Dead-Tank-Bauweise für Unterbrechereinheiten ist das Gehäuse dieser Unterbrechereinheiten geerdet. In diesem Fall kann es auch zweckmäßig sein, den Steuerkondensator als Teil der gesamten Unterbrechereinheit in der Art zu gestalten, dass ein zylinderförmiges Dielektrikum zwischen einem Gehäuse der Unterbrechereinheit und der darin liegenden Vakuumschaltröhre entlang einer Schaltachse beweglich gelagert ist.

Weitere Ausgestaltungsformen der Erfindung und weiterer Merkmale werden anhand der folgenden Figuren näher erläutert. Dabei handelt es sich um rein schematische Ausgestaltungsformen, die keine Einschränkung des Schutzbereichs darstellen.

Dabei zeigen:
- Figur 1:: Ein Schaltbild eines Schaltgerätes in diesem Fall mit zwei Unterbrechereinheiten, die in Reihe geschaltet sind und zu jeder Unterbrechereinheit ein parallelgeschalteter variabler Steuerkondensator besteht.
- Figur 2:: Eine Unterbrechereinheit in einer Live-Tank-Aus-führung, mit einem parallelgeschalteten Steuerkondensator und
- Figur 3:: Eine Unterbrechereinheit in einer Dead-Tank-Ausge-staltung, wobei eine Vakuumröhre in einem geerdeten Gehäuse angeordnet ist und ein Dielektrikum innerhalb des Gehäuses bewegbar gelagert ist.

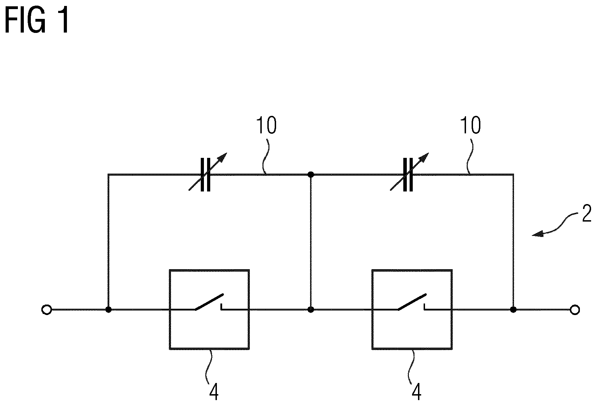

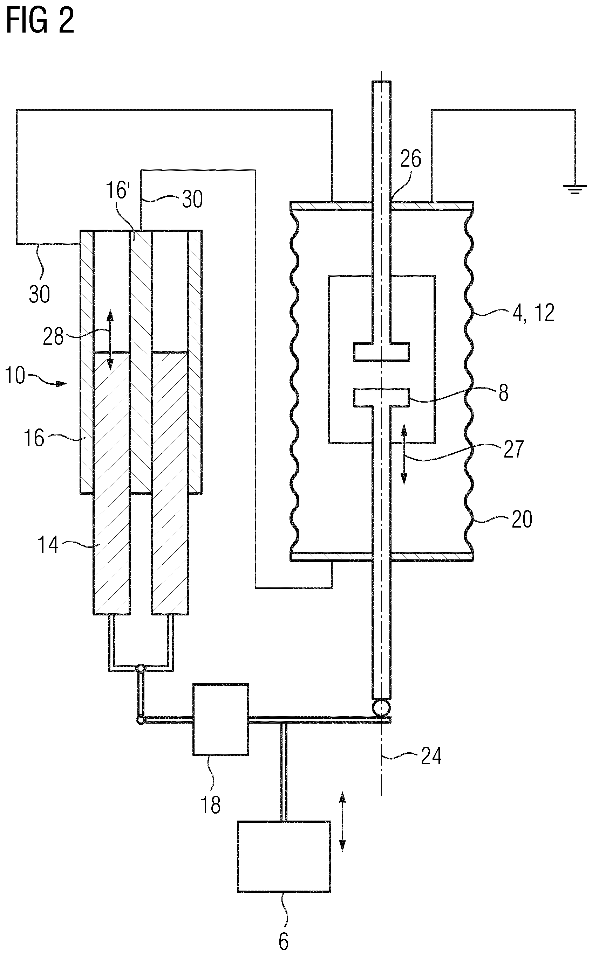

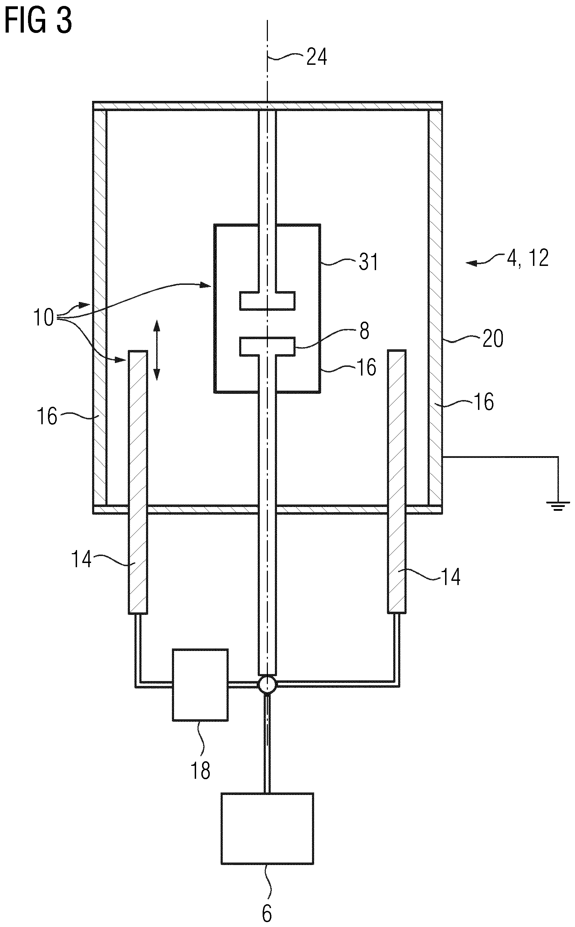

In Figur 1 ist eine schematische Darstellung eines Schaltbildes gegeben, das veranschaulicht, wie das Schaltgerät grundsätzlich elektrisch verschaltet ist. Hierzu sind zwei Unterbrechereinheiten 4 in Reihe bzw. in Serie geschaltet, zu jeder Unterbrechereinheit 4 ist wiederum ein variabler Steuerkondensator 10 parallelgeschaltet. Die Gesamtschaltung zwischen den Unterbrechereinheiten 4 und den Steuerkondensatoren 10 stellt das Schaltgerät 2 dar. Die Unterbrechereinheiten 4 sind bevorzugt in Form von Vakuumschaltröhren 12 ausgestaltet, wie dies in den Figuren 2 und 3 dargestellt ist. Grundsätzlich kann jedoch auch eine Vakuumschaltröhre 12 mit einer Unterbrechereinheit in Form einer Gasstrecke in Reihe geschaltet sein.

In den Figuren 2 und 3 ist jeweils nur ein Teil des Schaltgerätes 2 dargestellt, nämlich jeweils nur eine Unterbrechereinheit 4 mit dem zu ihr parallel geschalteten Steuerkondensator. Bei der Unterbrechereinheit 4 gemäß Figur 2 handelt es sich um eine Vakuumschaltröhre 12 in einer sogenannten Live-Tank-Ausgestaltung. Hierbei ist die Vakuumröhre 12 in ein Isoliergehäuse 20 eingebettet, wobei das Isoliergehäuse 20 den Strompfad gegenüber der Umgebung isoliert und somit auch nicht geerdet ist. Die Darstellung der Komponenten der Vakuumschaltröhre 12 sind in Figur 2 sehr schematisch dargestellt, die Vakuumschaltröhre weist einen Kontakt 8 auf, der bewegbar gelagert ist und entlang einer Schaltachse 24 translatorisch zu seinem hier nicht näher benannten Gegenkontakt bewegbar ist. Hierzu ist eine Antriebseinheit 6 vorgesehen, durch die eine translatorische Bewegung 27 entlang der Schaltachse 24 resultiert. Die Antriebseinheit 6 ist ferner über ein übersetzendes Element 18 in Form eines Getriebes mit dem Steuerkondensator 10 mechanisch gekoppelt. Der Steuerkondensator 10 ist in der Ausgestaltungsform gemäß Figur 2 zylinderförmig aufgebaut, wobei eine äußere Zylinderwand eine Elektrode 16 darstellt und eine weitere Elektrode 16` ebenfalls zylinderförmig im Zentrum des genannten Zylinders angeordnet ist. Ferner ist ein Dielektrikum 14 vorgesehen, das in einem zylindrischen Zwischenraum zwischen der ersten Elektrode 16 und der zweiten Elektrode 16` ebenfalls entlang einer Zylinderlängsachse translatorisch bewegbar gelagert ist. Die Elektroden 16, 16' und das Dielektrikum 14 stellen Komponenten des Steuerkondensators 10 dar, wobei in diesem Fall das Dielektrikum 14 über das übersetzende Element 18 mit der Antriebseinheit mechanisch in Verbindung steht und somit mit dieser mechanisch gekoppelt ist. Beim Schließen des Kontaktes 8 durch die Bewegung der Antriebseinheit 6 wird gleichzeitig eine Bewegung des Dielektrikums 14 entlang des Pfeiles 28 bewirkt.

Hierbei handelt es sich in Figur 2 um eine beispielhafte Darstellung, in der das Dielektrikum 14 entlang des Pfeiles 28 bewegt wird. Grundsätzlich wäre es auch möglich beispielsweise die Elektrode 16' oder die Elektrode 16 über das übersetzende Element 18 durch die Antriebseinheit 6 bewegbar zu lagern. Durch die translatorische Bewegung des Dielektrikums 14 (oder einer anderen Komponente des Steuerkondensators 10) verändert sich während des Schaltvorganges die Kapazität, die zwischen den Elektroden 16, 16` bzw. zwischen Kontakten 30 des Steuerkondensators 10 anliegt. Das heißt, die Kapazität, die bezüglich der Unterbrechereinheit 4 bzw. der Vakuumschaltröhre 12 während des Schaltvorganges parallel zu dieser Unterbrechereinheit 4 anliegt, ist während des Schaltvorganges zeitlich variabel.

In Figur 2 ist der Steuerkondensator 10 zylinderförmig ausgestaltet. Dabei ist die Konstruktion des Steuerkondensators grundsätzlich veränderbar. Auch die Bauweise in Form von Plattenkondensatoren mit plattenförmigen Kondensatoren und Dielektrika ist dabei zweckmäßig.

Gemäß des Standes der Technik sind die Steuerkondensatoren gemäß Figur 1 mit einer festen Kapazität behaftet. Typische Kapazitäten, die hierfür in einer Leistungsklasse der Vakuumschaltröhre von bis 245 kV anliegen, liegen zwischen 300 pF und 2000 pF. Kennt man das Schaltverhalten der Vakuumschaltröhre 12 bzw. der Unterbrechereinheit 4 im Allgemeinen, so kann man die jeweils anliegende Spannung während des Schaltvorganges messen. Dabei handelt es sich um die Spannung, die zu jedem Zeitpunkt t während des Schaltverhaltens bei Anwendung eines Steuerkondensators mit einer festen Kapazität auftritt. Durch die Veränderung der Kapazität des Steuerkondensators 10, wie hier in den Figuren 1 bis 3 beschrieben ist, kann auf die anliegende Spannung an der Unterbrechereinheit 4 in Abhängigkeit von der Zeit während des Schaltvorganges Einfluss genommen werden. Dazu kann es nötig sein, dass sich die Kapazität des Steuerkondensators nicht linear während des Schaltvorganges ändert, was wiederum dazu führt, dass das übersetzende Element 18 in der Art ausgestaltet sein muss, dass die gewünschte Bewegungskinematik für die Bewegung des Dielektrikums 14 eingestellt ist. Dies kann mit geeigneten Maßnahmen, die aus dem Getriebebau bekannt sind, erzielt werden. Es ist damit möglich, eine exakte Kapazitätsänderung so einzustellen, dass während des Schaltvorganges an den Unterbrechereinheiten 4 gemäß Figur 1 stets eine nahezu konstante und gleich hohe Spannung anliegt.

Wenn man diese Spannung bestimmen kann und auch beeinflussen kann, wie das mit der Vorrichtung gemäß Figur 2 beschrieben ist, kann für eine vorgegebene Bemessungsspannung der Reihenschaltung gemäß Figur 1 jeweils eine Unterbrechereinheit 4 so gewählt werden, dass sie sehr nahe an ihre Nennspannung, die die Spannungsfestigkeit der Unterbrechereinheit 4 bestimmt, liegt. Somit erreicht bei vorgegebener Bemessungsspannung der einzelnen Unterbrechereinheit 4, also beispielsweise einer bestimmten Vakuumschaltröhre 12 in einer bestimmten Spannungsklasse, die Reihenschaltung eine höheren Spannungsfestigkeit als dies ohne die variablen Steuerkondensatoren 10 der Fall wäre. Das heißt wiederum, dass zur Bereitstellung einer bestimmten Spannungsfestigkeit eines Schaltgerätes insgesamt Unterbrechereinheiten 4 bzw. Vakuumschaltröhren 12 mit einer jeweils niedrigeren Spannungsfestigkeit zum Einsatz kommen können, was die Gesamtinvestitionskosten für das Schaltgerät 2 erheblich verringern kann.

In Figur 3 ist eine alternative Ausgestaltung der Parallelschaltung aus Figur 1, nämlich aus der Unterbrechereinheit und dem Steuerkondensator 10 dargestellt. Im Unterschied zu der Parallelschaltung von Unterbrechereinheit 4 und Steuerkondensator 10 aus Figur 2 handelt es sich bei der Darstellung in Figur 3 um eine Unterbrechereinheit nach der sogenannten Dead-Tank-Bauweise, bei der eine Vakuumschaltröhre 12 in einem Gehäuse 22 angeordnet ist. Der Unterschied zu dem Isoliergehäuse 20 in Figur 2 besteht darin, dass das Gehäuse 22 in Figur 3 geerdet ist. Das heißt also, es besteht während des Schaltvorganges ein elektrisches Feld zwischen einer Außenseite der Vakuumröhre 12 und dem Gehäuse 22. Dieses elektrische Feld kann beeinflusst werden, wenn zwischen die Vakuumröhre 12 und dem Gehäuse 22 ein Dielektrikum 14 eingebracht wird. In diesem Fall wirkt sowohl das Gehäuse 16 als auch ein Gehäuse 31 der Vakuumröhre 12 als Elektroden 16. Wenn das Dielektrikum in analoger Weise, wie dies bereits zu Figur 2 beschrieben ist, über ein übersetzendes Element 18, also mit einem Getriebe während des Schaltvorganges zwischen das Gehäuse 31 und das Gehäuse 22 bewegt wird, hat dies eine kapazitätsverändernde Wirkung.

Der Steuerkondensator 10 wird in der Darstellung gemäß Figur 3 somit durch das Gehäuse 20, das Gehäuse 31 der Vakuumschaltröhre 12 und durch Dielektrikum 14 gebildet. Auch hierbei gilt wieder, dass das Dielektrikum 14 durch die Antriebseinheit 6 während des Schaltvorganges gemeinsam mit dem Kontakt 8 angetrieben wird. Eine Kopplung der Bewegungskinematik zwischen der Bewegung des Kontaktes 8 und des Dielektrikums 14 wird dabei, wie bereits in Figur 2 beschrieben, durch das übersetzende Element 18 gewährleistet. Auf diese Weise kann auch hier die Kapazitätsänderung während des Schaltvorganges zwar mechanisch mit dem Antrieb des Kontaktes 8 gekoppelt, aber von diesem dynamisch gesehen unabhängig vollzogen werden.

### Bezugszeichenliste

- 2: Schaltgerät
- 4: Unterbrechereinheit
- 6: Antriebseinheit
- 8: Kontakt
- 10: Steuerkondensator
- 12: Vakuumschaltröhre
- 14: Dielektrikum
- 16: Elektrode
- 18: übersetzendes Element
- 20: Isoliergehäuse
- 22: Gehäuse (geerdet)
- 24: Schaltachse
- 26: Kontaktierung
- 27: translatorische Bewegung
- 28: Bewegung Dielektrikum
- 30: Kontakte
- 31: Gehäuse Vakuumschaltröhre

## Patentansprüche

1. Schaltgerät mit zwei in Reihe geschalteten Unterbrechereinheiten (4) mit mindestens einer Antriebseinheit (6) zur Bewegung mindestens eines Kontaktes und mit zwei jeweils zu den Unterbrechereinheiten (4) parallel geschalteten Steuerkondensatoren **dadurch gekennzeichnet, dass** zumindest ein Steuerkondensator (10) zur Veränderung der Kapazität mechanisch bewegbare Komponenten aufweist und mindestens eine dieser Komponenten eine mechanische Kopplung mit der Antriebseinheit (6) aufweist.

2. Schaltgerät nach Anspruch 1, **dadurch gekennzeichnet, dass** zumindest eine der Unterbrechereinheiten (4) eine Vakuumschaltröhre (12) ist

3. Schaltgerät nach Anspruch 1 oder 2, **dadurch gekennzeichnet, dass** die bewegbare Komponente mindestens eines Steuerkondensators (10) ein Dielektrikum (14), eine Elektrode (16) oder ein elektrischer Kontakt ist.

4. Schaltgerät nach einem der Ansprüche 1 bis 3, **dadurch gekennzeichnet, dass** ein übersetzendes Element (18) geeignet zur Steuerung einer Bewegungskinematik der Komponente vorgesehen ist.

5. Schaltgerät nach einem der vorhergehenden Ansprüche, **dadurch gekennzeichnet, dass** zumindest eine der Unterbrechereinheiten in ein nicht geerdetes Isoliergehäuse (20) eingebettet ist.

6. Schaltgerät nach Anspruch 5, **dadurch gekennzeichnet, dass** der Steuerkondensator außerhalb des nicht geerdeten Isoliergehäuses (20) angeordnet ist.

7. Schaltgerät nach einem der Ansprüche 1 bis 4, **dadurch gekennzeichnet, dass** zumindest eine Unterbrechereinheit (4) von einem geerdeten Gehäuse (22) umgeben ist.

8. Schaltgerät nach Anspruch 7, **dadurch gekennzeichnet, dass** das Dielektrikum (14) zylinderförmig ausgestaltet ist und entlang einer Schaltachse (24) zwischen der Vakuumschaltröhre (12) und dem Gehäuse (22) translatorisch verschiebbar angeordnet ist.

## Claims

1. Switching device having two interrupter units (4) connected in series, having at least one drive unit (6) for moving at least one contact and having two control capacitors which are connected in parallel with the interrupter units (4) in each case, **characterized in that** at least one control capacitor (10) has mechanically movable components for changing the capacitance and at least one of these components has a mechanical coupling to the drive unit (6).

2. Switching device according to Claim 1, **characterized in that** at least one of the interrupter units (4) is a vacuum switching tube (12).

3. Switching device according to Claim 1 or 2, **characterized in that** the movable component of at least one control capacitor (10) is a dielectric (14), an electrode (16) or an electrical contact.

4. Switching device according to one of Claims 1 to 3, **characterized in that** a transmission element (18), suitable for controlling the movement kinematics of the component, is provided.

5. Switching device according to one of the preceding claims, **characterized in that** at least one of the interrupter units is embedded in a non-grounded insulating housing (20).

6. Switching device according to Claim 5, **characterized in that** the control capacitor is arranged outside the non-grounded insulating housing (20).

7. Switching device according to one of Claims 1 to 4, **characterized in that** at least one interrupter unit (4) is surrounded by a grounded housing (22).

8. Switching device according to Claim 7, **characterized in that** the dielectric (14) has a cylindrical configuration and is arranged to be displaceable in a translatory manner along a switching axis (24) between the vacuum switching tube (12) and the housing (22).

## Revendications

1. Appareil de coupure comprenant deux unités (4) d'interruption montées en série, comprenant au moins une unité (6) d'entraînement pour le déplacement d'au moins un contact et comprenant deux condensateurs de commande montés en parallèle respectivement avec les unités (4) d'interruption, **caractérisé en ce qu'**au moins un condensateur (10) de commande a des composants mobiles mécaniquement pour modifier la capacité et au moins l'un des ces composants a un accouplement mécanique avec l'unité (6) d'entraînement.

2. Appareil de coupure suivant la revendication 1, **caractérisé en ce qu'**au moins l'une des unités (4) d'interruption est un tube (12) interrupteur à vide.

3. Appareil de coupure suivant la revendication 1 ou 2, **caractérisé en ce que** le composant mobile d'au moins un condensateur (10) de commande est un diélectrique (14), une électrode (16) ou un contact électrique.

4. Appareil de coupure suivant l'une des revendications 1 à 3, **caractérisé en ce qu'**un élément (18) de transmission est prévu d'une manière appropriée à la commande d'une cinématique de déplacement du composant.

5. Appareil de coupure suivant l'une des revendications précédentes, **caractérisé en ce qu'**au moins l'une des unités d'interruption est incorporée dans un boîtier (20) isolant, qui n'est pas mis à la terre.

6. Appareil de coupure suivant la revendication 5, **caractérisé en ce que** le condensateur de commande est disposé à l'extérieur du boîtier (20) isolant, qui n'est pas mis à la terre.

7. Appareil de coupure suivant l'une des revendications 1 à 4, **caractérisé en ce qu'**au moins l'une des unités (4) d'interruption est entourée d'un boîtier (22) mis à la terre.

8. Appareil de coupure suivant la revendication 7, **caractérisé en ce que** le diélectrique (14) est de forme cylindrique et est monté coulissant en translation le long d'un axe (24) de coupure entre le tube (12) interrupteur à vide et le boîtier (22).
